# EUROPÄISCHE PATENTSCHRIFT

(11) **EP 3 308 386 B1**
(45) Veröffentlichungstag und Bekanntmachung des Hinweises auf die Patenterteilung: **06.01.2021**
(21) Anmeldenummer: 16748075.5
(22) Anmeldetag: 19.07.2016
(51) Int. Cl.: H01C 7/12

(54) **VORRICHTUNG MIT AUSNEHMUNGEN ZUR AUFNAHME VON STABILISIERUNGSSTANGEN EINES ÜBERSPANNUNGSABLEITERS, SYSTEM MIT DER VORRICHTUNG, ÜBERSPANNUNGSABLEITER UND VERFAHREN ZUR MONTAGE EINES ÜBERSPANNUNGSABLEITERS**
DEVICE COMPRISING RECESSES FOR ACCOMMODATING STABILIZER BARS OF A SURGE ARRESTER, SYSTEM COMPRISING SAID DEVICE, SURGE ARRESTER, AND METHOD FOR ASSEMBLING A SURGE ARRESTER
DISPOSITIF COMPORTANT DES ÉVIDEMENTS POUR LOGER DES TIGES DE STABILISATION D'UN DISPOSITIF DE PROTECTION CONTRE LES SURTENSIONS, SYSTÈME ÉQUIPÉ DE CE DISPOSITIF, DISPOSITIF DE PROTECTION CONTRE LES SURTENSIONS ET PROCÉDÉ DE MONTAGE D'UN DISPOSITIF DE PROTECTION CONTRE LES SURTENSIONS

(30) Priorität: 05.08.2015 DE 102015214942
(43) Veröffentlichungstag der Anmeldung: 18.04.2018
(73) Patentinhaber: Siemens Aktiengesellschaft, 80333 München (DE)
(72) Erfinder: PIPPERT, Erhard, 14624 Dallgow-Döberitz OT Seeburg (DE)
(86) Internationale Anmeldenummer: PCT/EP2016/067130
(87) Internationale Veröffentlichungsnummer: WO 2017/021134

(56) Entgegenhaltungen:
- WO-A1-2012/062695
- WO-A1-2013/000732
- WO-A1-2015/004121

## Beschreibung

Die Erfindung betrifft eine Vorrichtung gemäß dem Oberbegriff des Anspruchs 1, ein System mit der Vorrichtung gemäß Anspruch 8, einen Überspannungsableiter gemäß Anspruch 9 sowie ein Verfahren zur Montage eines Überspannungsableiters gemäß Anspruch 11.

Bei Hochspannungsüberlandleitungen werden an den Enden der Übertragungstrassen Transformatoren angeschlossen, um die Spannung am Zielort auf ein niedrigeres Spannungsniveau herunter zu transformieren. Diese Transformatoren müssen vor Überspannungen auf den angeschlossenen Hochspannungsüberlandleitungen geschützt werden. Überspannungen entstehen z.B. bei einem Blitzeinschlag auf der Überlandleitung. Zum Schutz der Transformatoren werden daher i.d.R. so genannte Überspannungsableiter eingesetzt, die elektrotechnische Bauelemente als Widerstände aufweisen, die unterhalb einer vorgegebenen Spannung eine hohen Widerstand aufweisen und oberhalb der vorgegebenen Spannung einen geringen Widerstand. Die vorgegebene Spannung wird dabei etwas oberhalb der Nennspannung der Hochspannungsüberlandleitung vorgesehen, so dass im Falle eines Blitzschlags die Überspannung den Überspannungsableiter auslöst, der einen Strom auf Erde ableitet, bis die Überspannung abgebaut und die vorgegebene Spannung wieder unterschritten wird.

Ein solcher Überspannungsableiter ist z.B. aus der Produktbroschüre "High-voltage surge arresters, Product guide" der Siemens AG, 2014, Order No. E50001-G630-A249-X-4A00 auf Seite 12 bekannt. Das dort gezeigte Modell 3EL verwendet Metaloxidblöcke als Widerstände, die in einen Käfig aus Haltevorrichtungen und Stäben aus einem nicht-leitenden Material gesteckt sind - diese Bauform wird daher als "Cage"- oder Käfigbauweise bezeichnet. Um die Metalloxidblöcke ist eine Isolierschicht aus Silikongummi angebracht. Auf Seite 14 wird eine weitere Bauform "hollow core" beschrieben, bei dem eine Säule mit Widerständen in einem Rohr angeordnet wird.

Bisher werden dabei Haltevorrichtungen als vorgeformte Stützplatten mit Bohrungen zur Aufnahme von glasfaserverstärkten Stabilisierungsstangen bzw. Stäben vorgesehen. Wenn die Stabilisierungstangen von oben oder unten, also quer zur Haltevorrichtung in die Bohrungen eingeführt werden, hat der entstehende Käfig den Vorteil, dass die Widerstände in einer Säule gestapelt und im fertig montierten Überspannungsableiter sicher und stabil gelagert werden.

Ausgehend von einer bisherigen Vorrichtung mit Ausnehmungen zur Aufnahme von Stabilisierungsstangen eines Überspannungsableiters stellt sich an die Erfindung die Aufgabe, eine Vorrichtung anzugeben, die vergleichsweise einfach montierbar ist.

Vorrichtungen mit Ausnehmungen zur Aufnahme von Stabilisierungsstangen eines Überspannungsableiters, die ein seitliches Einführen der Stabilisierungsstangen ermöglichen, sowie entsprechende Montageverfahren, sind bekannt aus den Druckschriften WO 2013/000732 A1, WO 2012/062695 A1 und WO2015/004121 A1.

Die Erfindung löst diese Aufgabe durch eine Vorrichtung gemäß Anspruch 1.

Dies hat den Vorteil, dass im Gegensatz zu bisherigen Vorrichtungen mit einfachen Bohrungen die Stabilisierungsstangen nicht mehr von oben oder unten in die Bohrungen "eingefädelt" werden müssen, sondern seitlich eingeführt werden können. Hierdurch vereinfacht sich die Montage der Stabilisierungsstangen, was eine automatisierte Montage ermöglicht.

Es sind die Ausnehmungen zum Mittelpunkt der Vorrichtung hin geringfügig schmaler als der Durchmesser der Stabilisierungsstangen ausgebildet, so dass diese beim seitlichen Einführen in die Ausnehmungen einrasten. Dies ist ein Vorteil, weil die Stabilisierungsstangen auf diese Weise selbsttätig gehalten werden und nicht in Längsrichtung verrutschen, was die Montage erleichtert.

Zusätzlich oder alternativ weisen die Ausnehmungen zum Rand der Vorrichtung hin jeweils einen Schlitz auf, so dass die Vorrichtung eine ausreichende Biegsamkeit erhält, um die Stabilisierungsstangen beim seitlichen Einführen in die Ausnehmungen schnappen zu lassen. Dies ist ein Vorteil, weil durch das Einschnappen die Montage weiter erleichtert wird.

In einer weiteren bevorzugten Ausführungsform der erfindungsgemäßen Vorrichtung sind die Ausnehmungen derart ausgebildet, dass durch Einfügen der Stabilisierungsstangen eine Innenkontur ausbildbar ist, die zur Aufnahme von Widerständen geeignet ist. Dies ist ein Vorteil, weil so ein stabiler Käfig zum Halten der Widerstände ausbildbar ist.

In einer weiteren bevorzugten Ausführungsform der erfindungsgemäßen Vorrichtung die Ausnehmungen derart ausgebildet sind, dass die Innenkontur im Wesentlichen kreisförmig ausbildbar ist.

In einer weiteren bevorzugten Ausführungsform der erfindungsgemäßen Vorrichtung ist die Vorrichtung im Wesentlichen ringförmig ausgebildet, wobei im Bereich der Ausnehmungen die Vorrichtung nach außen hin verbreitert ausgebildet ist und wobei die Ringbreite in etwa dem Durchmesser der Stabilisierungsstangen entspricht. Dies ist ein Vorteil, weil auf diese Weise eine materialsparende, leichte und gleichzeitig flexible Bauweise erreicht wird.

In einer weiteren bevorzugten Ausführungsform der erfindungsgemäßen Vorrichtung sind die Ausnehmungen in einem gleichen Winkelabstand voneinander angeordnet. Dies ist ein Vorteil, weil sich beim Gebrauch in einem Überspannungsableiter auf die Vorrichtung einwirkende Biegekräfte gleichmäßig verteilen, was die Stabilität und Haltbarkeit der Vorrichtung verbessert.

In einer weiteren bevorzugten Ausführungsform der erfindungsgemäßen Vorrichtung sind drei Ausnehmungen vorgesehen. Dies ist ein Vorteil, weil mit drei Ausnehmungen für drei Stabilisierungsstangen eine besonders materialsparende und leichte Bauform gegeben ist, die gleichzeitig noch ein sicheres Halten der Widerstände im Käfig sicher stellt.

In einer weiteren bevorzugten Ausführungsform der erfindungsgemäßen Vorrichtung sind vier Ausnehmungen vorgesehen. Dies ist ein Vorteil, weil mit vier Ausnehmungen für vier Stabilisierungsstangen eine besonders stabile Bauform gegeben ist, die ein sicheres Halten der Widerstände im Käfig sicher stellt.

Ferner stellt sich an die Erfindung ausgehend von einem bisherigen System zur Aufnahme von Widerständen eines Überspannungsableiters die Aufgabe, ein System anzugeben, das vergleichsweise einfach montierbar ist.

Die Erfindung löst diese Aufgabe durch ein System gemäß Anspruch 8. Es ergeben sich sinngemäß die gleichen Vorteile wie eingangs für die erfindungsgemäße Vorrichtung geschildert.

Des Weiteren stellt sich an die Erfindung ausgehend von einem bisherigen Überspannungsableiter die Aufgabe, einen Überspannungsableiter anzugeben, der vergleichsweise einfach montierbar ist.

Die Erfindung löst diese Aufgabe durch einen Überspannungsableiter gemäß Anspruch 9. Es ergeben sich sinngemäß die gleichen Vorteile wie eingangs für die erfindungsgemäße Vorrichtung geschildert.

Ferner stellt sich an die Erfindung ausgehend von einem bisherigen Verfahren zur Montage eines Überspannungsableiters die Aufgabe, ein Verfahren anzugeben, mit dem ein Überspannungsableiter vergleichsweise einfach montierbar ist.

Die Erfindung löst diese Aufgabe durch ein Verfahren gemäß Anspruch 11. Es ergeben sich sinngemäß die gleichen Vorteile wie eingangs für die erfindungsgemäße Vorrichtung geschildert.

Zur weiteren Erläuterung der Erfindung zeigen in schematischer Darstellung die
- Figur 1: eine bisherige Vorrichtung mit Ausnehmungen zur Aufnahme von Stabilisierungsstangen eines Überspannungsableiters,
- Figur 2: ein Ausführungsbeispiel einer erfindungsgemäßen Vorrichtung, und
- Figur 3: eine Detailansicht der erfindungsgemäßen Vorrichtung gemäß Figur 2, und
- Figur 4: eine erste Ansicht eines Ausführungsbeispiel des erfindungsgemäßen Systems mit der Vorrichtung gemäß Figur 2, und
- Figur 5: eine zweite Ansicht des erfindungsgemäßen Systems gemäß Figur 4.

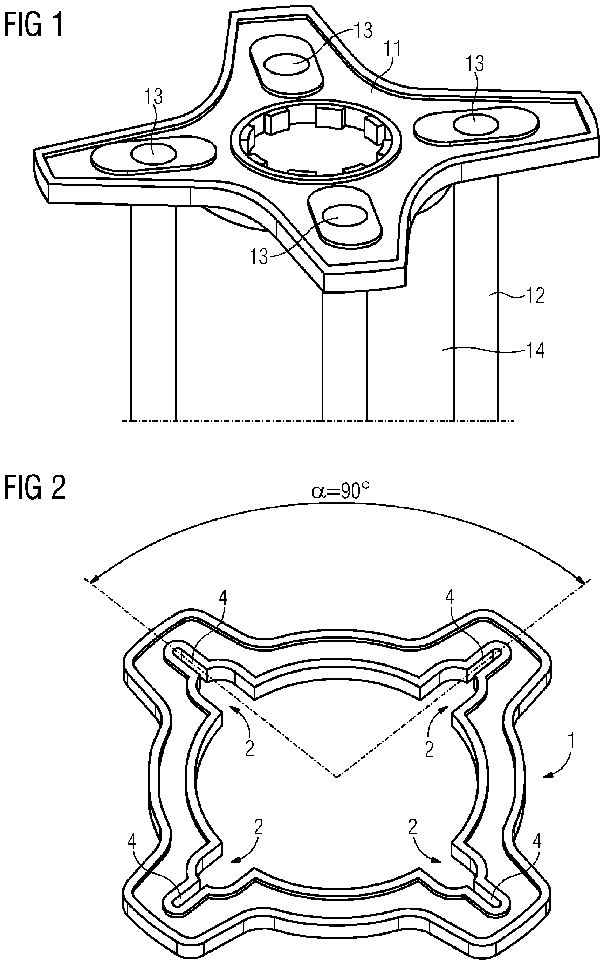

Die Figur 1 zeigt eine bisherige Vorrichtung 11 mit vier Ausnehmungen 13 zur Aufnahme von Stabilisierungsstangen 12 eines Überspannungsableiters. Die Vorrichtung 11 wird montiert, indem die vier Stabilisierungsstangen 12 von oben oder unten in die Bohrungen bzw. Ausnehmungen 13 eingeführt werden. Dieser Arbeitsschritt erfordert i.d.R. eine hohe Genauigkeit und ist 35 daher vergleichsweise zeitaufwendig.

Vorrichtung 11 und Stabilisierungsstangen 12 bilden einen Käfig aus, der zahlreiche übereinander angeordnete Widerstände 14 festhält.

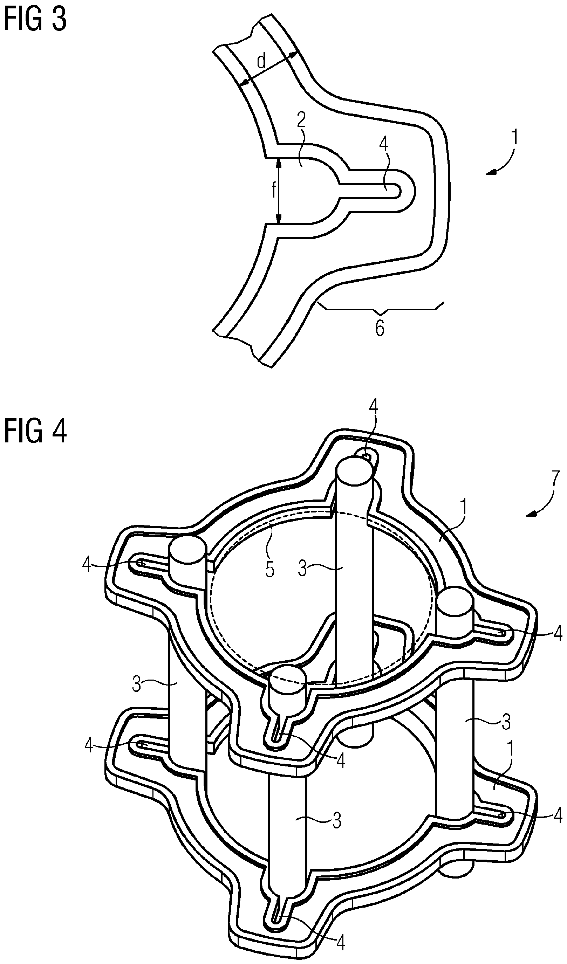

Die Figuren 2 und 3 zeigen ein Ausführungsbeispiel einer erfindungsgemäßen Vorrichtung 1 mit vier Ausnehmungen 2 zur Aufnahme von Stabilisierungsstangen 3 eines Überspannungsableiters. Die Ausnehmungen 2 sind in einem gleichen Winkelabstand α (in diesem Beispiel 90°) voneinander angeordnet und zum Mittelpunkt der Vorrichtung 1 hin derart geöffnet, dass bei der Montage die Stabilisierungsstangen 3 seitlich einführbar sind. Hierdurch wird die Montage wesentlich vereinfacht.

Die Ausnehmungen 2 sind zum Mittelpunkt der Vorrichtung 1 hin geringfügig schmaler f als der Durchmesser e der Stabilisierungsstangen 3 ausgebildet, so dass diese beim seitlichen Einführen in die Ausnehmungen 2 einrasten. Weiterhin weisen die Ausnehmungen 2 zum Rand der Vorrichtung 1 hin jeweils einen Schlitz 4 auf, so dass die Vorrichtung 1 eine ausreichende Biegsamkeit erhält, um die Stabilisierungsstangen 3 beim seitlichen Einführen in die Ausnehmungen 2 schnappen zu lassen.

Die Vorrichtung 1 ist im Wesentlichen ringförmig ausgebildet, wobei im Bereich der Ausnehmungen 2 die Vorrichtung 1 nach außen hin verbreitert ausgebildet ist 6 und wobei die Ringbreite d in etwa dem Durchmesser e der Stabilisierungsstangen 3 entspricht.

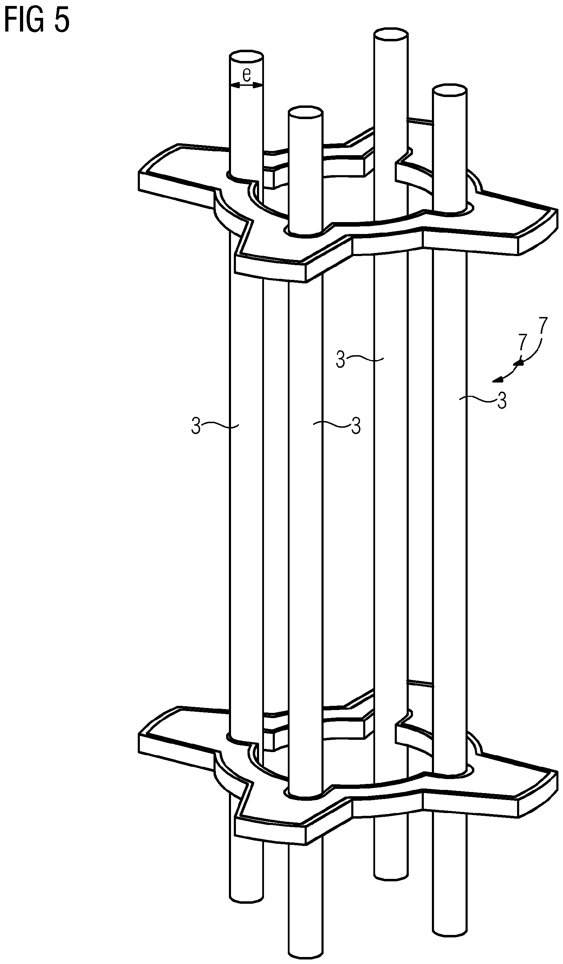

Die Figuren 4 und 5 zeigen Ansichten eines Ausführungsbeispiels des erfindungsgemäßen Systems 7 mit der Vorrichtung 1 gemäß Figur 2 bzw. 3. Es sind zwei Vorrichtungen 1 dargestellt, die mit vier Stabilisierungsstangen 3 einen Käfig zur Aufnahme von Widerständen bilden. Die Ausnehmungen 2 sind derart geformt, dass durch Einfügen der Stabilisierungsstangen 3 eine kreisförmige Innenkontur 5 ausgebildet wird, die zur Aufnahme von runden Widerständen geeignet ist.

Dadurch, dass jede Vorrichtung 1 im Bereich der Ausnehmungen 2 nach außen hin verbreitert ausgebildet ist 6, wird eine Außenkontur gebildet. So kann das erfindungsgemäße System besonders gut in ein Rohr eingeführt werden, wobei die Innenseite des Rohres auf den nach außen hin verbreiterten Bereichen aufliegt. Wird das System in einem entsprechenden Rohr angeordnet, lässt sich ein Überspannungsableiter in der sog. "hollow core" Bauform einfach herstellen.

## Patentansprüche

1. Vorrichtung (1) mit Ausnehmungen (2) zur Aufnahme von Stabilisierungsstangen (3) eines Überspannungsableiters, wobei die Ausnehmungen (2) zum Mittelpunkt der Vorrichtung (1) hin derart geöffnet sind, dass bei der Montage die Stabilisierungsstangen (3) seitlich einführbar sind,
**dadurch gekennzeichnet, dass**
die Ausnehmungen (2) zum Mittelpunkt der Vorrichtung (1) hin geringfügig schmaler (f) als der Durchmesser (e) der Stabilisierungsstangen (3) ausgebildet sind, so dass diese beim seitlichen Einführen in die Ausnehmungen (2) einrasten, und/oder dass die Ausnehmungen (2) zum Rand der Vorrichtung (1) hin jeweils einen Schlitz (4) aufweisen, so dass die Vorrichtung (1) eine ausreichende Biegsamkeit erhält, um die Stabilisierungsstangen (3) beim seitlichen Einführen in die Ausnehmungen (2) schnappen zu lassen.

2. Vorrichtung (1) nach Anspruch 1, **dadurch gekennzeichnet, dass** die Ausnehmungen (2) derart ausgebildet sind, dass durch Einfügen der Stabilisierungsstangen (1) eine Innenkontur (5) ausbildbar ist, die zur Aufnahme von Widerständen geeignet ist.

3. Vorrichtung (1) nach Anspruch 2, **dadurch gekennzeichnet, dass** die Ausnehmungen (2) derart ausgebildet sind, dass die Innenkontur (5) im Wesentlichen kreisförmig ausbildbar ist.

4. Vorrichtung (1) nach einem der vorhergehenden Ansprüche, **dadurch gekennzeichnet, dass** die Vorrichtung (1) im Wesentlichen ringförmig ausgebildet ist, wobei im Bereich der Ausnehmungen (2) die Vorrichtung (1) nach außen hin verbreitert ausgebildet ist (6) und wobei die Ringbreite (d) in etwa dem Durchmesser (e) der Stabilisierungsstangen (3) entspricht.

5. Vorrichtung (1) nach einem der vorhergehenden Ansprüche, **dadurch gekennzeichnet, dass** die Ausnehmungen (2) in einem gleichen Winkelabstand (α) voneinander angeordnet sind.

6. Vorrichtung (1) nach einem der vorhergehenden Ansprüche, **dadurch gekennzeichnet, dass** drei Ausnehmungen (2) vorgesehen sind.

7. Vorrichtung (1) nach einem der Ansprüche 1 bis 5, **dadurch gekennzeichnet, dass** vier Ausnehmungen (2) vorgesehen sind.

8. System (7) zur Aufnahme von Widerständen eines Überspannungsableiters, aufweisend mindestens eine Vorrichtung (1) nach einem der Ansprüche 1 bis 7 und jeweils eine in jede Ausnehmung (2) der mindestens einen Vorrichtung (1) eingeführte Stabilisierungsstange(3).

9. Überspannungsableiter mit einem System (7) nach Anspruch 8, **dadurch gekennzeichnet, dass** in das System (7) mindestens ein Widerstand eingeführt ist.

10. Überspannungsableiter nach Anspruch 9, **dadurch gekennzeichnet, dass** in das System (7) mehrere Widerstände derart gestapelt sind, dass eine Reihenschaltung der Widerstände erreicht wird.

11. Verfahren zur Montage eines Überspannungsableiters nach Anspruch 9 oder 10, **dadurch gekennzeichnet, dass** in die Ausnehmungen (2) der Vorrichtung (1) Stabilisierungsstangen (3) zur Ausbildung eines Käfigs eingeführt werden, in dem anschließend Widerstände positioniert werden.

## Claims

1. Apparatus (1) with recesses (2) for receiving stabilization bars (3) of a surge arrester, wherein the recesses (2) are open in the direction of the centre point of the apparatus (1) in such a way that the stabilization bars (3) can be laterally inserted during assembly,
**characterized in that**
the recesses (2) are formed in a manner slightly narrower (f) than the diameter (e) of the stabilization bars (3) in the direction of the centre point of the apparatus (1), so that the said stabilization bars latch into the recesses (2) when laterally inserted, and/or **in that** the recesses (2) each have a slot (4) in the direction of the edge of the apparatus (1), so that the apparatus (1) exhibits a sufficient degree of flexibility to allow the stabilization bars (3) to snap into the recesses (2) when laterally inserted.

2. Apparatus (1) according to Claim 1, **characterized in that** the recesses (2) are formed in such a way that an inner contour (5), which is suitable for receiving resistors, can be formed by insertion of the stabilization bars (1).

3. Apparatus (1) according to Claim 2, **characterized in that** the recesses (2) are formed in such a way that the inner contour (5) can be formed in a substantially circular manner.

4. Apparatus (1) according to one of the preceding claims,
**characterized in that** the apparatus (1) is formed in a substantially annular manner, wherein the apparatus (1) is formed in an outwardly widened manner (6) in the region of the recesses (2) and wherein the ring width (d) corresponds approximately to the diameter (e) of the stabilization bars (3) .

5. Apparatus (1) according to one of the preceding claims,
**characterized in that** the recesses (2) are arranged at the same angular distance (α) from one another.

6. Apparatus (1) according to one of the preceding claims,
**characterized in that** three recesses (2) are provided.

7. Apparatus (1) according to one of Claims 1 to 5,
**characterized in that** four recesses (2) are provided.

8. System (7) for receiving resistors of an surge arrester, having at least one apparatus (1) according to one of Claims 1 to 7 and in each case one stabilization bar (3) which is inserted into each recess (2) of the at least one apparatus (1).

9. Surge arrester comprising a system (7) according to Claim 8, **characterized in that** at least one resistor is inserted into the system (7).

10. Surge arrester according to Claim 9, **characterized in that** a plurality of resistors can be stacked into the system (7) in such a way that a series connection of the resistors is achieved.

11. Method for assembling a surge arrester according to Claim 9 or 10, **characterized in that** stabilization bars (3) are introduced into the recesses (2) of the apparatus (1) for the purpose of forming a cage in which resistors are then positioned.

## Revendications

1. Dispositif (1) ayant des évidements (2) de réception de tiges (3) de stabilisation d'un dispositif de protection vis-à-vis des surtensions, les évidements (2) étant ouverts vers le centre du dispositif (1), de manière à pouvoir, au montage, introduire latéralement les tiges (3) de stabilisation,
**caractérisé en ce que**
les évidements (2) sont constitués en étant légèrement plus étroits, vers le centre du dispositif (1), que le diamètre des tiges (3) de stabilisation, de manière à ce que celles-ci s'encliquètent lors de l'introduction latérale dans les évidements (2) et/ou **en ce que** les évidements (2) ont, vers le bord du dispositif (1), respectivement, une fente (4), de manière à ce que le dispositif (1 ) ait une flexibilité suffisante pour pouvoir encliqueter les tiges (3) de stabilisation, lorsqu'elles sont introduites latéralement dans les évidements (2).

2. Dispositif (1 ) suivant la revendication 1, **caractérisé en ce que** les évidements (2) sont constitués de manière à pouvoir constituer, lors de l'insertion des tiges (1 ) de stabilisation, un contour (5) intérieur propre à la réception de résistances.

3. Dispositif (1 ) suivant la revendication 2, **caractérisé en ce que** les évidements (2) sont constitués de manière à ce que le contour (5) intérieur puisse être constitué sensiblement en forme de cercle.

4. Dispositif (1) suivant l'une des revendications précédentes, **caractérisé en ce que** le dispositif (1) est constitué en étant sensiblement de forme annulaire, dans lequel, dans la partie des évidements (2), le dispositif (1) est constitué (6) en s'élargissant vers l'extérieur et dans lequel la largeur de l'anneau (d) correspond à peu près au diamètre (e) des tiges (3) de stabilisation.

5. Dispositif (1) suivant l'une des revendications précédentes, **caractérisé en ce que** les évidements (2) sont disposés à une même distance (α) angulaire les uns des autres.

6. Dispositif (1) suivant l'une des revendications précédentes, **caractérisé en ce qu'**il est prévu trois évidements (2).

7. Dispositif (1) suivant l'une des revendications 1 à 5, **caractérisé en ce qu'**il est prévu quatre évidements (2).

8. Système (7) de réception de résistance d'un dispositif de protection vis-à-vis des surtensions, comportant au moins un dispositif (1) suivant l'une des revendications 1 à 7, et, respectivement, une tige (3) de stabilisation insérée dans chaque évidement (2) du au moins un dispositif (1).

9. Dispositif de protection vis-à-vis des surtensions, comprenant un système (7) suivant la revendication 8, **caractérisé en ce qu'**au moins une résistance est insérée dans le système (7).

10. Dispositif de protection vis-à-vis des surtensions suivant la revendication 9, **caractérisé en ce que** plusieurs résistances sont empilées dans le système (7), de manière à obtenir un circuit série des résistances.

11. Procédé de montage d'un dispositif de protection vis-à-vis des surtensions suivant la revendication 9 ou 10, **caractérisé en ce que** l'on introduit, dans les évidements (2) du dispositif (1), des tiges (3) de stabilisation pour constituer une cage, dans laquelle ensuite on met des résistances en position.
